# EUROPEAN PATENT SPECIFICATION

(11) **EP 4 272 039 B1**
(45) Date of publication and mention of the grant of the patent: **08.04.2026**
(21) Application number: 20838581.5
(22) Date of filing: 30.12.2020
(51) Int. Cl.: G05B 23/02

(54) **METHOD FOR MONITORING A CONTINUOUS INDUSTRIAL PROCESS AND SYSTEM FOR PERFORMING SAID METHOD**
VERFAHREN ZUR ÜBERWACHUNG EINES KONTINUIERLICHEN INDUSTRIELLEN PROZESSES UND SYSTEM ZUR DURCHFÜHRUNG DES VERFAHRENS
PROCÉDÉ DE SURVEILLANCE DE PROCESSUS INDUSTRIEL CONTINU ET SYSTÈME DE RÉALISATION DUDIT PROCÉDÉ

(43) Date of publication of application: 08.11.2023
(73) Proprietor: ABB SCHWEIZ AG, 5400 Baden (CH)
(72) Inventor: JUHLIN, Prerna, 69126 Heidelberg (DE); KOTRIWALA, Arzam Muzaffar, 68526 Ladenburg (DE); LI, Nuo, 68167 Mannheim (DE); SCHLAKE, Jan-Christoph, 64293 Darmstadt (DE); LENDERS, Felix, 64293 Darmstadt (DE); BISKOPING, Matthias, 69493 Hirschberg (DE); KLOEPPER, Benjamin, 68199 Mannheim (DE); BHALODI, Kalpesh, 64673 Zwingenberg (DE); POTSCHKA, Andreas, 38642 Goslar (DE); JANKA, Dennis, 69121 Heidelberg (DE)
(74) Representative: Zimmermann & Partner Patentanwälte mbB
(86) International application number: PCT/EP2020/088051
(87) International publication number: WO 2022/144082

(56) References cited:
- WO-A1-2020/023998
- CN-A- 109 298 685
- CN-A- 111 582 892
- CN-B- 109 375 595

## Description

Aspects of the invention relate to a method for monitoring a continuous industrial process, in particular an industrial mining process. Further aspects relate to a method for generating an adaptive simulation model for monitoring, analysing and simulating characteristics of the industrial process. Further aspects relate to using the adaptive simulation model to identify material blobs in the material flow, and exporting an event log file referring to the material blobs and representing the material flow. Further aspects relate to a system for performing the method.

### Technical background:

Many industrial processes include a series of processing steps often performed separately at different processing stations, and logistical operations such as storage and transport of material between or within these stations. Control and monitoring of the production assets involved in the industrial process are often performed with specialized tools and methods. Even for an industrial process with a well-defined material flow, these tools often differ strongly in their functionality, for example, a warehouse or stockyard management software will emphasize different aspects of the process than a process controller controlling the machines of a processing station.

While it is often possible to find optimal conditions for each separate operation within the industrial process, an optimization typically is based on a siloed view of each processing station or operation of the industrial process. This can result in conflicting operational strategies, and a lack of knowledge on the impact of one specific parameter on the whole process. Furthermore, it is often not possible to easily monitor all aspects of the process, identify bottlenecks or perform an analysis on possible impacts of variations within the process.

A potential way to overcome the above-mentioned shortcomings for simple processes is the creation of a digital twin. A digital twin can enable connectivity of assets within the process and improve the homogenization of data. However, for large-scale industrial processes, the creation of a digital twin can be challenging. Particularly, the integration of potentially non-static industrial processes can impede the utilization of digital twin technology in this context. Furthermore, it is often not possible to adequately leverage the data provided by a digital twin, particularly data related to material flow within the industrial process.

Document CN 111 582 892 A describes a method for quality traceability in the whole process of quick-frozen food. Establishing a quality traceability system includes the visualization of the dumpling line production process based on digital twins, digital modeling to build a basic factory information model, and integration with the physical factory to realize a new production method.

Document CN 109 298 685 A describes a digital factory implementation method. A digital plant has a six-layer architecture including a first layer as a mechanical layer, a second layer as a transmission or drive layer, a third layer of the programming logic controller layer, a fourth layer as a process control or logistics system layer, a fifth layer as a manufacturing execution system layer or as an enterprise resource, and a sixth layer of the planning layer.

Document CN 109 375 595 B describes a visual workshop monitoring method. The method includes establishing a 3D scene model of a virtual workshop, and determining the operating status of the three-dimensional scene model of the workshop according to the real-time data of the workshop.

Document WO 2020/023998 A1 describes methods for operational state determination and modification. The method includes receiving data associated with an identified problem, using an Option Generator to analyse the data and generate at least one option to solve the problem, and modelling the problem and / or at least one option using a Modelling Engine to generate a modelling output.

### Summary of the invention

In view of the above, there is a need for an efficient way to generate a process digital twin suitable for dynamically monitoring a continuous industrial process. Furthermore, there is a need for leveraging the data provided by the digital twin to provide additional insights into the process.

The invention is set out in the appended set of claims. According to the independent claims, a method for monitoring a continuous industrial process and a system for performing said method are provided.

According to an aspect, a method for monitoring a continuous industrial process is described. The industrial process includes a number of processing stations for processing material and a material flow between the number of processing stations. Each processing station dynamically provides data representing a state of the processing station. The method includes providing, for each processing station, a processing station layout of the processing station. The processing station layout includes a representation of a physical layout of the processing station, and a representation of a material flow-paths to and from the processing station. The processing station layout is configured for enabling a mapping of the material flow to and from the processing station. The method further includes providing, for each processing station, an interface model of the processing station. The interface model includes a representation of data input ports and data output ports of the processing station. The interface model is configured for enabling a mapping of a data flow to the data input ports and from the data output ports of the processing station. The method further includes generating an information metamodel from the processing station layout and the interface model of the number of processing stations. The information metamodel includes a process layout model. The process layout model includes the processing station layouts of the number of processing stations, and a process interface model. The process interface model includes the interface models of the number of processing stations. The method further includes generating an adaptive simulation model of the industrial process by importing the data representing the state of the processing station provided by the number of processing stations into the adaptive simulation model via the information metamodel.

According to a further aspect, a system for performing the method according to an embodiment described herein is presented.

According to an aspect, the method for monitoring a continuous industrial process relates to an industrial process with a material flow between processing stations. Continuous, in the context of this disclosure, can be understood as a process involving a continuous flow of material within the process. Typical industrial processes can include agricultural processes such as harvesting, food/beverage processing, chemical/pharmaceutical manufacturing, pulp and paper production, consumer good manufacturing, metal processing, battery production, semiconductor fabrication, or land- and aircraft manufacturing, as well as processes similar or related to these processes.

According to an aspect, the industrial process can be a mine process. Several aspects of the disclosure will be explained by illustration in the context of a mine process, however, the described method may be applicable for other types of industrial processes, such as the industrial processes described above, and provide the described benefits for other types of industrial processes. The material flow of the process, particularly the mine process, can include, in one example, the transfer, transport and processing of ore, chemicals for processing, waste material, fuel, water or further materials.

The process, particularly a mine process, can include processing stations. Processing stations, in the sense of this disclosure, can be physical processing stations which process a material, e.g. ore processing stations such as crushers, mixers or the like. Processing stations, in the sense of this disclosure, can also be virtual stations that relate to the mine process by providing information about the mine process, such as planning stations, e.g. for geological planning, logistic planning, market integration or process planning. Processing stations, in the sense of this disclosure, can be physical operations with no permanent or stationary character, such as blasting for providing raw material, or the hauling or transport of material, e.g. via conveyors, trains, diesel or electric trucks, boats or such. Processing stations, in the sense of this disclosure, can be stations which do not involve a chemical or mechanical processing of the material, such as warehouses or stockyards.

According to an aspect, a number of processing stations within the industrial process has a material flow between the processing stations. In one example, a processing station can receive material, process the material, and dispense the processed material. In another example, a processing station can transfer material. In another example, a processing station can store the material. Combinations of such processes in one processing station are possible.

According to an aspect, a processing station dynamically provides data representing a state of the processing station. The data representing the state of the processing station can include information on the material flow, such as current processing rate, material quality, power consumption, storage levels, customer orders, transfer speed between processing stations, truck or train schedules, or such. The data can be sensor data. The data can be derived from sensor data. The data can include planned states, such as expected tonnage or yields. The data can represent anticipated states, such as arrival times, e.g. arrival times derived from sending times. The data can be, for some processing stations, such as planning stations described above, virtual. The data can be dynamically provided, such as when requested by an external receiver, periodically according to predefined intervals, or when certain predefined conditions apply, for example when a material batch has been successfully processed or when the material quality falls below a certain threshold. According to an aspect, the industrial process includes a number of processing stations providing data representing a state of the respective processing station.

According to an aspect, the method includes prov iding, for each processing station, a processing station layout. The processing station layout includes a representation of a physical layout of the processing station. In one example, the processing station can be a crusher, and the representation of the physical layout of the crusher can include the location of the crusher, the performance of the crusher, the connection with other components of the mine, e.g. a conveyor or a downstream machine, the power source of the crusher or such. If the processing station is a virtual or non-physical processing station, such as a planning stage or a logistic path, the representation of the physical layout of the processing station can be empty or undefined. The processing station layout further includes a representation of material flow-paths to and from the processing station. Material flow-paths can, in one example, include the type of expected material, the minimum or maximum amounts of material, the expected output material flow in dependence of the respective input material flow, the required time for processing the material or such. The representation of material flow-paths can be suitable for creating a material flow map of material between processing stations. The processing station layout enables a mapping of the material flow to and from each processing station. The mapped material flow typically does not represent the actual flow, i.e. transfer of material. The mapped material flow can be a mapped material flow-path, i.e. representing potential routes for the material, particularly between processing stations.

According to an aspect, the method includes providing, for each processing station, an interface model of the processing station. The interface model includes a representation of data input ports and data output ports of the processing station. Data input and output ports can be addresses of the processing station, particularly addresses for sending or receiving data, such as network addresses of the processing station. Data input and output ports can be configured for directed communication. The representation of data input and output ports can include target ports, e.g. of a further processing station, a controlling tool or an analysis tool or such. The input and output ports of the processing station can be the data ports through which the processing station provides the data representing the state of the processing station, as described above. In one example, the processing station is a crusher, and the data input and output ports are provided by a control module of the crusher, e.g. by a connection between the control module and a data network such as a local data network or the internet. The interface model enables a mapping of a data flow to the data input ports and from the data output ports of the processing station. The mapped data flow can be a list, map or model of the available data ports, i.e addresses, of the respective processing station. The mapped data flow can include information about the type, structure, source, format, expected interval, and/or underlying sensor type of data, such that from the mapped data flow, the connectivity of the processing stations becomes clear. The mapped data flow can include further data for defining aspects of the mapped data flow. The mapped data flow typically does not represent exchanged data, but connectivity of processing stations, particularly of processing stations with other components of the industrial process, such as further processing stations.

According to an aspect, the method includes generating an information metamodel from the processing station layout and the interface model of the number of processing stations. The information metamodel includes a process layout model. The process layout model can be a model representing the layout of the industrial process, particularly in terms of processing stations within the industrial process, particularly including the aspects of the processing station layout as previously discussed. The process layout model includes the processing station layouts of the number of processing stations. The process layout model can include information representing links and/or connections between processing stations, such as material flow-paths. The links and/or connections can be a network of material flow-paths, and the process layout model can include a topology of the network of material flow-paths. Said links can be incorporated as elements within processing station layouts, or can be generated during the generation of the information metamodel.

According to an aspect, the generated information metamodel further includes a process interface model. The process interface model can be a model representing the layout of the industrial process, particularly in terms of data interfaces available within the industrial process, particularly including the aspects of the interface model of a processing station as previously discussed. The process interface model includes the interface models of the number of processing stations. The interface model can include information representing links and/or connections between processing stations, such as data connections, ports or addresses. Said links can be incorporated as elements within the interface model of the processing stations, or can be generated during the generation of the information metamodel.

According to an aspect, generating the information metamodel can be accomplished by utilizing exporters. Exporters can be tools, such as software tools, provided between the processing station and the information metamodel. Exporters can be configured for interpreting data provided by the processing station, such as by a control module of the processing station, e.g. as a log-file, as a data stream, or such, particularly via a data input or a data output port of the processing stations, such as the data input and data output ports described earlier. An exporter can provide the processing station layout of the processing station. An exporter can provide the interface model of the processing station. The exporter can be a resource type exporter for exporting the resource type of a resource, such as a processing station. The exporter can be a data model type exporter for exporting the data model type provided by a resource, such as a processing station, particularly a software or control module monitoring the processing station. Type exporters, such as resource type exporters or data model type exporters, can be used for building a type library of the processing stations within the industrial process. In one example, the type library can be built according to AutomationML's System Unit Class Libraries.

The exporter can be a process layout exporter for importing the layout of the industrial process into an instance model, the instance model comprising all instances, e.g. all processing stations, within the industrial process. The process layout exporter can, together with the type library of the processing stations within the industrial process, be utilized for building an instance model of the industrial process. The instance model can be included in the process layout model of the industrial process, i.e. the information metamodel. In one example, the instance model can be built according to AutomationML's Instance Hierarchy.

The exporter can further be a data value address exporter for importing a data value address, such as a representation of a data input port of a processing station. The data value address exporter can, in some examples, be a data value importer, providing the functionality of a data value address exporter but from the information metamodel, particularly an instance model included in the information metamodel, to the processing station. The data value address exporters and importers can be used for building a process interface model, such as the process interface model described earlier, included in the instance model and the information metamodel of the process.

According to an aspect, generating the information metamodel can include generating a type library from the processing station layout and the interface model of the number of processing station. Generating the type library can be performed by utilizing an exporter, as described earlier.

According to an aspect, generating the information metamodel can include generating an instance model comprising the processing station layout of at least one of the number of processing stations as defined by the type library. Generating the type library can be performed by utilizing an exporter, as described earlier.

According to an aspect, generating the information metamodel can include generating an instance model comprising an interface model of at least one of the number of processing stations as defined by the type library. Generating the instance model can be performed by utilizing an exporter, as described earlier.

According to an aspect, generating the information metamodel can include generating a process layout model and including the process layout model into the instance model by using a process layout exporter comprising the material flow-path to and from the at least one of the number of processing stations included in the instance model. Generating the process layout model can be performed by utilizing an exporter, as described earlier.

According to an aspect, generating the information metamodel can include importing data input ports for importing data representing the state of the processing station provided by the number of processing stations into the instance model. Importing the data input ports can be performed by utilizing an exporter, as described earlier.

According to an aspect, generating the information metamodel can include enabling a data flow between interfaces of the number of processing stations by using a data value exporter/importer linked via the instance model. The interfaces can be data ports of the processing stations, such as data input ports and data output ports. The data flow can be enabled such that it is still available for a significant duration after the creation of the information metamodel. Enabling the data flow between interfaces of the number of processing stations can include importers or exporters or a combination thereof, as described above.

According to an aspect, the method includes generating an adaptive simulation model of the industrial process. Generating the adaptive simulation model includes importing the data representing the state of the processing station provided by the number of processing stations into the adaptive simulation model. The importing of the data is performed via the information metamodel. The information metamodel can function as a hub, e.g. for aggregating, routing, converting and transferring the data provided by the processing stations. Typically, the information metamodel does not directly hold data values, i.e. the information metamodel includes the relevant process layout together with the relevant process interface model, the process interface model defining from where data can be retrieved by the adaptive simulation model. In particular, the information metamodel can utilize the process layout model for providing a map of the processing stations within the process, and the physical connections between the processing stations, particularly material flow-paths. The process layout model can be utilized for mapping a material flow within the industrial process, particularly all possible material flows. The information metamodel can further utilize the process interface model for linking data provided by the processing stations to the process layout model. The information metamodel, particularly by utilizing the process interface model, can further be used for converting the data provided by the processing stations into a common and/or interchangeable format, particularly by using a number of exporters or importers as described above. The information metamodel can provide the data provided by the number of processing stations to the adaptive simulation model. The data provided to the adaptive simulation model via the information metamodel can be structured, linked, enhanced, formatted, marked-up or expanded such that the data provided by the number of processing stations can be evaluated, by the adaptive simulation model, in the context of the industrial process, particularly in the context of the process layout model, particularly in the context of the material flow-paths of the industrial process.

According to an aspect, the adaptive simulation model can be adaptive. Adaptive, in the context of this disclosure, can include the property of the adaptive simulation model to respond to changes in the properties of the industrial process, such as such as changes in the data provided by the number of processing stations, which is to be expected at all times due to e.g. a change in operation parameters, as well as changes in the process layout model or the process interface model. A change in the process layout model or the process interface model can e.g. include the removal of a processing station due to maintenance, and a resulting change of material flow-paths to and from said processing station. The information metamodel and the adaptive simulation model can be configured for automatically re-evaluating the industrial process and generating a new information metamodel and/or a new adaptive simulation model. According to an aspect, the changes can be virtual to enable what-if analyses, e.g. introduce virtual changes, such as adding or removing virtual processing stations. In one example, an analysis can involve the addition of a virtual conveyor belt to assess the possible effect of adding the conveyor belt.

According to an aspect, adaptive, in the context of this disclosure, can further include the selection of an appropriate simulation model from a library of simulation models. In one example, the model can be a previously generated model which best represents a current state of the industrial process. In another example, the chosen model can emphasize one aspect of the process more than another process, e.g. if an emphasis is put on optimizing a set of conveyors, an adaptive simulation model might be selected from the library of simulation models which simulates the set of conveyors with a higher resolution than other models. Selecting the appropriate adaptive simulation model from the library of adaptive simulation models may be performed automatically or as a result of user input.

According to an aspect, after the generation of the adaptive simulation model using the data included in the information meta model, the adaptive simulation model can be initiated using status information of the number of processing stations of the industrial process provided by the information metamodel. Furthermore, the adaptive simulation model can act as a "soft-sensor" to generate missing status information not provided by the information meta model, e.g. by simulating the missing data or by replacing the missing data with expected values, standard values or the likes. Simulating the missing data can involve the creation of a soft sensor to provide soft sensor data. The soft sensor data can then again be made available via the information metamodel to other applications.

According to an aspect, the method further comprises the utilization of data provided by the generated adaptive simulation model for the generation of a key performance indicator (KPI) dashboard. The KPI dashboard can be a known key parameter dashboard, such as the Dashboard application for use with the ABB Ability^{™} Manufacturing Operations Management (MOM) Applications, or customer specific MES platforms, or the Dashboard included in the ABB Ability^{™} Analytics and Visualization Services, or the ABB Ability^{™} Genix industrial analytics and Al suite.

According to an aspect, the method further comprises the utilization of data provided by the generated adaptive simulation model for the generation of a current operations monitor. The current operations monitor can include information on aspects of the industrial process, particularly material flow, processing station capacity, power usage and several such aspects. The current operations monitor can provide a visualization of the adaptive simulation model based on current results.

According to an aspect, the method further comprises the utilization of data provided by the generated adaptive simulation model for the generation of a future operations predictor. The future operations predictor can provide predictive analyses based on future timeframes.

According to an aspect, the method further comprises the utilization of data provided by the generated adaptive simulation model for the generation of a what-if analysis tool. The what-if analysis tool can simulate scenarios based on user-defined parameters and, for example, offer the possibility of initial value adjustment.

According to an aspect, the data provided by adaptive simulation model can be provided to an analytics application, such as one or a combination of the analytics application described above, and analysed by the analytics application. The analysed data can be utilized to provide feedback to the information metamodel for iteratively improving the information metamodel and/or the simulation accuracy based on the information metamodel. The feedback can be provided in the form of a feedback loop. The feedback can involve defining an element to be varied within the information metamodel, and/or a value by which the defined element is to be varied. In one example, the analytics application can detect or simulate that a variation of one element of the industrial process, such as e.g. a throughput of a processing station, does not correspond to the observed variation and adapt the information metamodel to better represent the industrial process.

According to an aspect, the information metamodel and the adaptive simulation model can be comprised in a digital twin of the industrial process. In one example, the information metamodel and the adaptive simulation model together form a digital twin of the process. The digital twin can be a model of a system of components or a system of systems, such as a model of an industrial process comprising processing stations. The digital twin can be used to evaluate the current condition of the industrial process, and predict future behavior, optimize operation and refine control aspects of the industrial process. The digital twin can reflect the industrial process' current configuration, age and environment and/or material flow. Data of the industrial process, such as data provided by a number of processing stations, can, via the digital twin, be directly streamed into tuning algorithms or analytics applications, such as the analytics applications described above.

According to an aspect, the interface model of each processing station can be configured for providing connectivity between the information metamodel and/or the adaptive simulation model and the processing station. In one example, the interface models of two processing stations can be configured for enabling, via the information metamodel and/or the adaptive simulation model, an exchange of information between two processing stations, or a higher number of processing stations, such as all processing stations included in the adaptive simulation model.

According to an aspect, the process layout model can link a number of processing station layouts according to the material flow-paths between the processing stations. The linking of the number of processing stations according to the material flow-paths between the processing stations can result in a map of the network of material flow-paths. The processing stations can be nodes within the network of material flow-paths.

According to an aspect, the process interface model of the information metamodel can link the data representing a state of the processing station provided by a processing station of the number of processing stations to the process layout model. In one example, the process interface model can be configured such that data sent from an outgoing data port can be correlated to an entity represented in the process layout model, such as a processing station. The correlation can be based on information comprised within the process interface model which links the data port, from which data was sent, to the entity represented in the process layout model.

According to an aspect, the method can include using the adaptive simulation model to identify material blobs in the material flow and to export an event log file referring to the material blobs and representing the material flow. The material blobs can be virtual. A material blob can be a representation of an arbitrary amount of material within an industrial process, particularly a continuous industrial process. A material blob can be, in one example, an amount of material processed in a process between two arbitrary events, such as an amount of material processed between two timepoints. A material blob does not have to be separate from other material blobs with regards to material, process or such, i.e. two material blobs can represent the same charge or batch of material, e.g. relate to material processed at different timepoints but within the same process or processing station. A virtual material blob can be virtual in that the separation of one batch of material into material blobs does not mean a corresponding separation of the actual material into distinct batches corresponding to the blobs. A virtual material blob can further be a material blob that does not represent physical material, i.e. is entirely virtual, e.g. for simulating material flow, analysing the process, performing a what-if analysis or such.

According to an aspect, the adaptive simulation model can provide an event log file referring to the material blobs and representing the material flow, particularly in the form of events related to material blobs. The event log file can include information corresponding to events in the industrial process. The event log file can be a file, a data stream, a transmission or such, i.e. the event log file does not need to be a file stored in a file system. The event log file can include information from which material blobs can be identified. The event log file can include information from which attributes of the material blobs can be correlated with the identified material blobs. The event log file can include key parameter indicators (KPIs) related to the material blobs. The KPIs can be KPIs as described above in relation to analytics applications. Attributes of the material blobs can correlate to attributes of the material from which the material blobs are derived. In one example, attributes of a material blob can include information such as material quality, quantity, energy spent for processing, history of the material blob or such.

According to an aspect, the adaptive simulation model can provide the event log file in a unitary format, such that material blobs can be identified and tracked for different processing stations, particularly different types of processing stations, or different instances of processing stations of identical, similar or different types. Ideally, event logs provided by processing stations in different, e.g. process station specific file formats, can be converted and provided in a unitary format by the adaptive simulation model and/or an exporter. For this, the adaptive simulation model and the information metamodel can be utilized in a manner such as one described above.

According to an aspect, identifying material blobs and exporting the event log file referring to the material blobs can include pre-processing the event log file before processing the event log file. Pre-processing the event log file can be performed by the adaptive simulation model or a separate tool. Pre-processing the event log file can exclude unnecessary data and/or reformat the data in the log file. Excluding unnecessary data can include identifying the unnecessary data, i.e. according to a predefined set of rules, such as a program. Unnecessary data can be data that does not carry any information or redundant information, such as double entries. Unnecessary data can be data for which it is known that it cannot be evaluated, understood, parsed or otherwise processed or analyzed by a downstream application, such as an analytics application described above. Pre-processing the event log file can reformat the event log file such that it can be processed by a downstream application. Reformatting can include providing the event log file in a specific file format, such as in a specific markup-language, such as JSON, XML, AutomationML or such. Reformatting can include reformatting only parts of the event log file, e.g. parts of the event log file which do not correspond to a specified format. Reformatting can include providing the event log file in several different formats, such as a specific file format required for each downstream application.

According to an aspect, identifying material blobs and exporting the event log file referring to the material blobs can include processing the event log file with a process mining technique to generate a process map. Processing the event log file can include generating a process map. Processing the event log file can include providing, inputting or feeding the event log file into a tool for performing a process mining technique, such as a process miner. The process miner can be a software tool or an analysing tool. The process mining technique can analyse, particularly mine the event log and generate, based on analysing the event log, a process map. The event log file can include events of the industrial process, and the process map can be a map that includes aspects relating to the industrial process, particularly a process map that maps material flow within the industrial process. The mapped material flow can be representative of actual material flow, such as current material flow or recorded material flow.

According to an aspect, the process mining technique described above can be included in a current operations monitor described earlier in relation to possible analytics applications.

According to an aspect, processing the event log file can further include determining case identifiers required by the process mining technique. Case identifiers can be attributes of an event. Case identifiers can identify events and/or link events to entities referred to within the event log file, such as aspects relating to the material flow, particularly material blobs. Case identifiers can be identifiers of material blobs, such as unique identifiers.

According to an aspect, processing the event log file can further include filtering and/or reducing noise. Filtering and/or reducing noise can be performed together with pre-processing the event log file, or be performed in tandem, or be performed in a separate step. Typically, filtering and/or reducing noise is a separate function to pre-processing. Particularly, filtering and/or reducing noise can be a function or set of functions performed on the data level of the event log file, i.e. include an evaluation of data. Filtering the event log file can include filtering events that do not contain meaningful data, such as data that will not contribute to a more accurate description of a material blob, such as attributes that are redundant or are not included in the process map. Reducing noise can include reducing noise of the event log file, such as by filtering the event log file as described above. Reducing noise can further include aggregating multiple events into groups of events or single events, particularly if the frequency of an event is high compared to other events within the event log file. Filtering and/or reducing noise can, for example, include removing, condensing or grouping status events which only indirectly relate to material blobs, such as events that represent common sensor readings, such as e.g. a periodic temperature reading at a processing station.

According to an aspect, the process map can be used to identify a bottleneck in the industrial process. Identifying the bottleneck can include identifying material a current material flow which is below a past or currently expected material flow. Identifying a bottleneck can include identifying aspects of the process represented in the process map which hinder full capacity material flow at other portions of the process map. Identifying a bottleneck can include identifying processing stations that hinder processing of material at full capacity at further upstream or downstream processing stations. Identifying a bottleneck can reveal operational or procedural delays in material flows.

According to an aspect, the method can include performing a conformance test. The conformance test can, in one example, utilize the data provided by the adaptive simulation model to test if aspects of the industrial process conform to predefined standards. Particularly, the conformance test can include evaluating if the industrial process or aspects of the industrial process or the product of the industrial process, such as the processed material, complies with the requirements of a specification, technical standard, contract, or regulation. In one example, conformance testing can include evaluating if processed material, such as a material represented in a material blob, conforms to material standards or processing standards. Performing a conformance test can show deviations from common material flows.

According to an aspect, the method can include performing a statistical analysis, particularly a statistical analysis on the data provided by the adaptive simulation model, the data provided by the process mining technique and/or the data included in the process map. The statistical analysis can yield statistical parameters relating to the industrial process, particularly the material flow within the industrial process. The statistical parameters can include average, mean or median values and/or errors or value and/or error ranges for aspects of the industrial process, as well as further statistical parameters of the industrial process or aspects of the industrial process.

According to an aspect, the results of the statistical analysis can be used for updating the information metamodel. In one example, the statistical analysis can be performed by an analytics application, such as an analytics application described above. The updating of the information metamodel based on the results of the statistical analysis can be a feedback loop as described above.

According to the invention, the method includes performing a discrete-event simulation. The discrete event simulation can be performed on data provided by the adaptive simulation model, the data provided by the process mining technique and/or the data included in the process map. The discrete-event simulation can include the introduction of a virtual event into a model of an industrial process, such as a digital twin, and observing the resulting changes of the digital twin. The discrete-event simulation can include simulating the event in an adaptive simulation model, such as an adaptive simulation model described above. The discrete-event simulation is used for predicting future states of the material flow. The material flow can be a physical material flow, and the discrete event simulation can simulate changes in the physical material flow based on discrete events. Discrete events can be, but are not limited to, interruptions of the material flow, introduction of material into the material flow, rerouting the material flow, delaying the material flow or such.

According to an aspect, the present disclosure relates to a system for performing a method as described herein. The system can be implemented in a computer or a number of computers, such as an offline machine, a computer network, a control station or the likes. The system can further comprise a cloud-based application, the cloud forming part of the system for performing the method.

According to an aspect, the system can include one or more processing stations. The processing stations can be processing stations as described herein, and include control modules, such as control modules capable of performing aspects of the method. In one example, a processing station can include means for performing one, one or more, several or all aspects of the methods described herein.

According to an aspect, the method described herein and the system for performing the method aggregate data of an industrial process, modify said data, perform analyses of the data and provide results of said aggregation, modification and analyses. The data obtained by each of these stages can be utilized for monitoring the process. The data obtained by each of these stages can be utilized for modifying the process, such as improving the process or aspects of the process. The data obtained by each of these stages can be utilized for controlling the industrial process, or aspects of the industrial process. In one example, the methods and systems described herein are improved monitoring and control systems for an industrial process, such as a mine process.

According to an aspect, the system or components of the system, such as a computer, a cloud-based device or a processing station, may comprise a network interface for connecting the device to a data network, in particular a global data network. The data network may be a TCP/IP network such as Internet. The device, e.g. the processing station, is operatively connected to the network interface for carrying out commands received from the data network. The commands may include a control command for controlling the device to carry out a task such as performing an operation described herein in relation to the method. In this case, the device is adapted for carrying out the task in response to the control command. The commands may include a status request. In response to the status request, or without prior status request, the device may be adapted for sending a status information to the network interface, and the network interface is then adapted for sending the status information over the network. The commands may include an update command including update data. In this case, the device is adapted for initiating an update in response to the update command and using the update data."

The data network may be an Ethernet network using TCP/IP such as LAN, WAN or Internet. The data network may comprise distributed storage units such as Cloud. Depending on the application, the Cloud can be in form of public, private, hybrid or community Cloud.

According to a further aspect, the device further comprises a network interface for connecting the device to a network, wherein the network interface is configured to transceive digital signal/data between the device and the data network, wherein the digital signal/data include operational command and/or information about the device or the network.

An advantage of the described method and system can be an increase in yield, a reduction of processing cost, a reduction of maintenance frequency, an increase in process safety and an earlier and safer detection of faults of or within an industrial process, such as a mine process.

A further advantage can be that the described method and system can provide a holistic representation of material and data flows across the entire industrial process. Different, heterogeneous data sources can be connected via the information metamodel, thereby offering a complete view of the industrial process, including all process resources and/or assets.

A further advantage can be an ability for efficient and flexible adaptions through modular integration and extensibility without the need for extensive, sometimes manual reworking and addition of new systems.

A further advantage can be the enablement of data interoperability between processing stations including heterogeneous systems with different interface standards. Meaning and usage alignment, which can be required on a semantic and pragmatic level to ensure that the transferred data's information and usage context, respectively, are also clearly communicated to the target systems, can be included in the transferred data. Alignments can beneficially be included at the type level, such as by utilizing AutomationML-based mappings.

A further advantage can be the system wide simulation and analysis encompassing the entire industrial process.

Further advantages, features, aspects and details that can be combined with embodiments described herein are evident from the dependent claims, the description and the drawings.

### Brief description of the Figures:

The details will be described in the following with reference to the figures, wherein
- Fig. 1: is a schematic view of a system for monitoring an industrial process.
- Fig. 2: is a schematic view of a mine process, representative for an industrial process as described herein.
- Fig. 3: is a schematic view of a material blob representation within a processing station as described herein.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

In the given embodiments, a mine process is used as an example for illustrating the general aspects described above. The described method and system can be equally applicable for other types of industrial process.

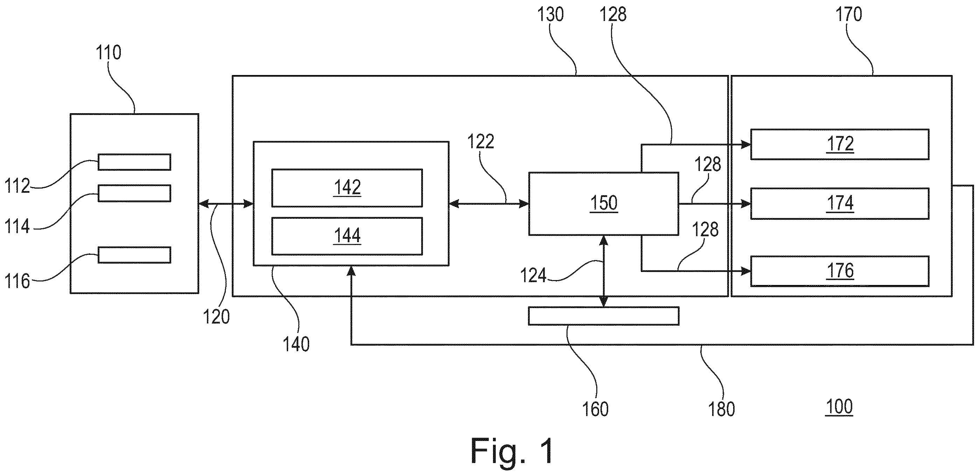

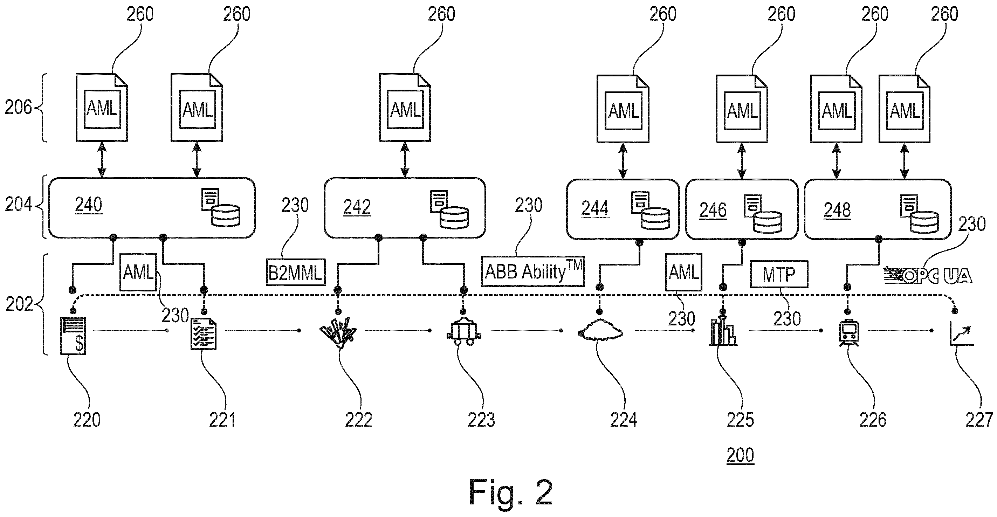

Referring to Fig. 1, according to an embodiment, a system 100 for monitoring an industrial process is shown. The industrial process includes several processing stations (not shown), each processing station comprising a controller. The controller comprises a mining software system, i.e. a software, examples of which will be discussed in more detail with reference to Fig. 2. In the embodiment shown in Fig. 1, a number of mining software systems 110, including software 112, software 114 and software 116 is provided. Each software can be specific for the type of processing station, i.e. the software type can emphasize different aspects specific to the type of process performed by the processing station, include different interfaces, file or data formats etc.

According to an embodiment, which can be combined with other embodiments described herein, the system 100 includes a digital twin 130, particularly a process digital twin. The digital twin 130 is typically represented in the form of a data construct; thus, the digital twin is typically comprised within a computer system or such. The digital twin includes an information metamodel 140 and an adaptive simulation model 150.

According to an embodiment, which can be combined with other embodiments described herein, the software systems 110 are connected to the information metamodel 140 by an exporter/importer 120. The exporter/importer 120 exports data provided by the processing stations in a format that is compatible with the information metamodel 140, and imports data into the mining software systems 110 in a format that is compatible with the respective software 112, 114, 116. Exporters/importers, such as exporter/importer 120, 122, 124 described herein, will sometimes be referred to only as exporter or importer, depending on their current function.

According to an embodiment, which can be combined with other embodiments described herein, the information metamodel 140 includes a type library 142. The type library 142 includes data model entity types from all connected systems. In the shown embodiment, the type library 142 is generated by utilizing the exporter 120. The type library includes the data model entity types, particularly in the form of AutomationML System Unit Classes. The data model entity types are be based on the process layout model as derived from the respective processing station layout, and the process interface model derived from the interface models of the respective processing stations. The processing station layouts and the interface models of the processing stations are provided by the software 112, 114, 116 and processed by the exporter 120.

According to an embodiment, which can be combined with other embodiments described herein, the type library 142 can be built in a process referred to as type creation. Type creation can typically be performed as a first operation in building an information metamodel. Type creation typically is semi-automatic. Type creation can utilize the exporter 120. Type creation typically is only required once for a specific industrial process.

According to an embodiment, which can be combined with other embodiments described herein, the information metamodel 140 includes an instance model 144. The instance model 144 includes an instance hierarchy, particularly in the form of an AutomationML Instance Hierarchy. The instance hierarchy includes instances for all connected systems based on the types included in the type library 142. The instance model 144 further includes the process layout model and the interface model.

According to an embodiment, which can be combined with other embodiments described herein, the instance model 144 includes a representation of the industrial process, particularly representing the processing stations as instances of a type according to types within the type library 142. The instances are modelled to be physically interconnected according to the process layout model, and/or connectively interconnected according to the process interface model.

According to an embodiment, which can be combined with other embodiments described herein, the instance model 144 can be built in a process referred to as instance creation. Instance creation can utilize the exporter 120. Instance creation can typically be performed automatically and thus quickly respond to changes in the industrial process, such as the layout of the industrial process, such as the removing or adding of processing stations.

According to an embodiment, which can be combined with other embodiments described herein, the information metamodel 140 in combination with exporter/importer 120 can provide connectivity between software 112, 114, 116 even though the software using different data formats. For this, data from one software, e.g. software 112, is exported by exporter 120. The information metamodel 140 then provides connectivity between connected systems 110, since the systems of the industrial process are included in the information metamodel, thus, data can be routed according to the information metamodel. The data is then provided by the importer 120 to, e.g. software 114, in a data format compatible with software 114.

According to an embodiment, which can be combined with other embodiments described herein, the digital twin 130 includes an adaptive simulation model 150. The adaptive simulation model 150 is generated using the information metamodel 140 provided by exporter 122. The adaptive simulation model can be selected from a simulation model library 160. Adaptions to the adaptive simulation model 150 and/or the simulation model library 160 can be performed, based on accuracy threshold requirements. The adaption can be performed with importer/exporter 124. The generation of the adaptive simulation 150 model can be semi-automatic.

According to an embodiment, which can be combined with other embodiments described herein, the adaptive simulation model 150 includes live data connections to the processing stations, i.e. the mining software systems 110, for receiving live data from the processing stations. The live data connection is provided by exporting the raw data of the software 110, 112, 114 with exporter 120 via the information metamodel 140 and exporter 122. The exported live data typically represents current states of the processing stations, which, due to contextualizing the data in the information metamodel, is provided in a homogeneous format and in the holistic context of the industrial process. The adaptive simulation model 150 can perform simulations of the industrial process according to the live data.

According to an embodiment, which can be combined with other embodiments described herein, the adaptive simulation model 150 provides the results of the simulation performed by the adaptive simulation model 150 to analytics applications 170 via exporter 128. According to an embodiment, the analytics application 170 can be a current operations monitor 172. The current operations monitor 172 utilizes live data to visualize current results. A current operations monitor 172 benefits from an accurate simulation, thus, the adaptive simulation model 150 can be adapted to closely represent the current state of the industrial process.

According to an embodiment, which can be combined with other embodiments described herein, the analytics application 170 can be a future operations predictor 174. The future operations predictor 174 can provide predictive analyses based on future timeframes. In one example, the future operations predictor 174 can utilize the results of the simulation of future timeframes based on an extrapolation of a current state.

According to an embodiment, which can be combined with other embodiments described herein, the analytics application 170 can be a what-if analysis tool 176. The what-if analysis tool 176 can provide an analysis based on user-defined simulation scenarios and can offer the possibility of initial value adjustment. In one example, the what-if analysis tool 176 can utilize the results of the simulation of a current state by changing one or more parameters within the current state and simulating the industrial process according to the adaptive simulation model according to the current model with the changed parameters.

According to an embodiment, which can be combined with other embodiments described herein, one or more of the analytics applications 170 can provide feedback to the digital twin 170, particularly the information metamodel 140. The feedback can include information relating to differences between the observed live data and the simulation based on the live data, and be utilized for adapting, particularly improving or tuning the information metamodel.

Referring now to Fig. 2, a layer model of a mine process 200 is shown. The mine process can be an industrial process as described in relation to Fig. 1. The layer model 200 has three layers, with the first layer 202 corresponding to the physical aspects of the mine process. The mine process includes different stations, such as processing stations. The mine process includes a block model 220. The block model can be a block model of a mine and be utilized in a planning step. The mine process includes a planning station 221. The planning station 221 can be utilized for the planning of operations within the mine, such as blasting. The mine process includes blasting 222. Blasting can produce material, such as raw material, such as ore. The material is hauled in operation 223, and stored in a stockyard 224. The material is then processed in station 225, e.g. a processing station, shipped to a port 226 and sold on a market 227.

According to an embodiment, which can be combined with other embodiments described herein, the layer model 200 includes a second layer 204. The second layer 204 includes mine software, control systems, and edge systems. The second layer 204 systems are connected to the first layer systems for receiving data from the first layer 202 systems. The data can be provided from the first layer 202 systems to the second layer 204 in various file formats 230. The file formats may be specific to the first layer 202 system or the second layer 204 system, e.g. utilizing a common file format or an industry standard file format.

According to an embodiment, which can be combined with other embodiments described herein, the block model 220 and the planning station 221 can be connected to a geological planning software 240 for providing data from the block model 220 and the planning station 221 to the geological planning software 240. The data can be provided to the geological planning software 240 as an AML file.

According to an embodiment, which can be combined with other embodiments described herein, the blasting process 222 and the hauling process 223 can be connected to a knowledge manager 242, e.g. ABB Ability^{™} Knowledge Manager for mining and mineral processing, for providing data from the blasting process 222 and the hauling process 223 to the knowledge manager 242. The data can be provided to the knowledge manager 242 as an B2MML file, and/or in an ABB Ability^{™} file format.

According to an embodiment, which can be combined with other embodiments described herein, the stockyard 224 can be connected to a stockyard management system 244, e.g. ABB Ability^{™} Stockyard Management System, for providing data from the stockyard 224 to the stockyard management systems 244. The data can be provided to the stockyard management system 244 as an AML file, and/or in an ABB Ability^{™} file format.

According to an embodiment, which can be combined with other embodiments described herein, the processing station 225 can be connected to a control system 246, e.g. ABB Ability^{™} System 800xA, for providing data from the processing station 225 to the control system 246. The data can be provided to the control system 246 as an AML file, and/or an MTP file.

According to an embodiment, which can be combined with other embodiments described herein, the port 226 can be connected to other systems 248, e.g. third party systems, such as logistics systems, systems which have an economic focus or such, for providing data from the port 226 to the system 248. The data can be provided to the system 248 in a file format compatible with the system 248, such as an OPC UA file.

According to an embodiment, which can be combined with other embodiments described herein, the layer model 200 includes a third layer 206. The third layer 206 includes mine layouts and interface models. The mine layouts can be processing station layouts according to embodiments described herein. The interface models can be interface models of a processing station, according to embodiments described herein. In the embodiment shown in Fig. 2, the mine layouts and interface models are represented as AML files 260, wherein each file 260 includes the respective data of the underlying processing station. The files 260 can be configured for enabling the creation of an information metamodel, as described herein. Creation of the files 260 based on the data provided by the software of the second layer 204 can be performed by utilizing an exporter/importer, such as the exporter/importer 120 described in relation to the embodiment shown in Fig. 1.

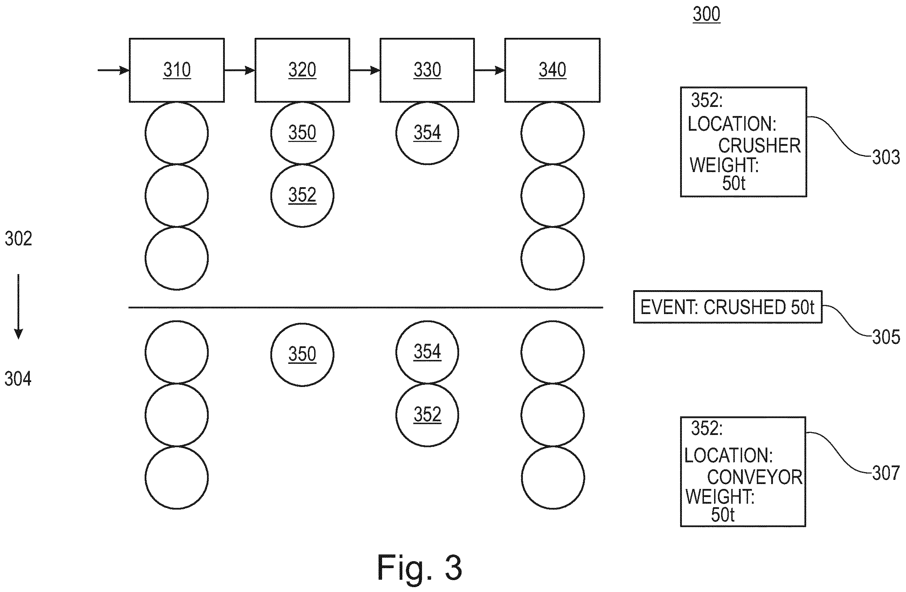

Referring now to Fig. 3, an example 300 for process mining an event log is shown. The event log can be an event log file provided by the digital twin, particularly adaptive simulation model according to an embodiment described herein. The process mining can be performed by an analysis application 170, such as a current operations monitor 172 described herein in relation to embodiment shown in Fig. 1.

In the example of Fig. 3, a processing station with a material flow is shown. The processing station is a crusher comprising a crusher input buffer 310, a crusher 320, a conveyor 330 and a stockpile 340. Two states of the processing station are shown, with state 302 being a first state and state 304 being a second state. Each state 302, 304 is represented as a number of material blobs, such as material blobs 350, 352 and 354. In the given example, the material blobs have already been identified and have attributes correlated thereto.

In the embodiment shown in Fig. 3, three material blobs are present in the input buffer 310, two material blobs 350, 352 are present in the crusher 320, one material blob 354 is present in the conveyor 330 and three material blobs are present in the stockpile 340.

In the example shown in Fig. 3, material blob 352 has, in the first state 302, the attributes 303. The attributes 303 include an identifier of the material blob ("352"), and the attributes "LOCATION: CRUSHER" and "WEIGHT: 50t".

In the example shown in Fig. 3, the processing station performs a crushing operation and, e.g. after 50 t material have been processed, provides an event which can be, via the digital twin, included in an event log file. The event log file can be mined for events relating to one of the material blobs of the processing station, such as event 305. Event 305 includes information "EVENT: CRUSHED 50t". Thus, from the event it is known that the state of the processing station has changed from state 302 to 304 and that a material blob with a weight of 50t has moved from the crusher to the conveyor. This material blob is identified as material blob 352, thus, the attributes 307 of material blob 352 at state 304 are changed to include "LOCATION: CONVEYOR".

According to an embodiment, which can be combined with other embodiments described herein, the process mining operation of the example in Fig. 3 can be employed at all stages of an industrial process represented by a digital twin, and for various types of events relating to the material flow within the industrial process. Thus, a process map, based on a material flow within the industrial process, can be created. The process map can be utilized for visualizing the material flow within the process, and for obtaining statistical data of the process. Thus, deviations to standard operations can be more easily identified even for complex industrial processes, and the process can be optimized and better scheduled.

A number of embodiments and examples have been described. Nevertheless, it is understood that various modifications may be made without departing from the scope of the invention, which is defined by the claims that follow.

### Reference signs:

- 100: System
- 110: Mining software systems
- 112: Software
- 114: Software
- 116: Software

- 120: Exporter/Importer
- 122: Exporter/Importer
- 124: Exporter/Importer
- 126: Exporter/Importer
- 128: Exporter

- 130: Process digital twin

- 140: Information Metamodel
- 142: Type library
- 144: Instance model

- 150: Adaptive simulation model

- 160: Simulation model library

- 170: Analytics applications
- 172: Current operations monitor
- 174: Future operations predictor
- 176: What-If analysis tool

- 180: Feedback import

- 200: Layer model of mine process
- 202: Layer 1
- 204: Layer 2
- 206: Layer 3

- 220: Block model
- 221: Planning
- 222: Blasting
- 223: Hauling
- 224: Stockyard
- 225: Processing
- 226: Port
- 227: Market

- 230: Data exchange file format

- 240: Geological planning software
- 242: Knowledge manager (ABB)
- 244: SYMS (ABB)
- 246: 800xA (ABB)
- 248: Other systems
- 260: Mine Layout and interface models

- 300: Process mining example
- 302: First state
- 303: Attributes of material blob 352 in first state
- 304: Second state
- 305: Logged event at transition from first to second state
- 307: Attributes of material blob 352 in second state

- 310: Crusher input buffer
- 320: Crusher
- 330: Conveyor
- 340: Stockpile
- 350: Material blob
- 352: Material blob
- 354: Material blob

## Claims

1. A computer-implemented method for monitoring a continuous industrial process (200), the industrial process comprising:
a number of processing stations (225, 300) for processing material,
a material flow between the number of processing stations (225, 300), wherein each processing station (225, 300) dynamically provides data representing a state of the processing station (225, 300);
the method comprising:
- providing, for each processing station (225, 300), a processing station layout (206, 260) of the processing station (225, 300), wherein the processing station layout (206, 260) comprises:
a representation of a physical layout of the processing station (225, 300), and
a representation of material flow-paths to and from the processing station (225, 300),
wherein the processing station layout (206, 260) is configured for enabling a mapping of the material flow to and from the processing station (225, 300);
- providing, for each processing station (225, 300), an interface model of the processing station (225, 300), wherein the interface model comprises:
a representation of data input ports and data output ports of the processing station (225, 300),
wherein the interface model is configured for enabling a mapping of a data flow to the data input ports and from the data output ports of the processing station (225, 300);
- generating an information metamodel (140) from the processing station layout (206, 260) and the interface model of the number of processing stations (225, 300), wherein the information metamodel (140) comprises:
a process layout model, the process layout model comprising the processing station layouts (206, 260) of the number of processing stations (225, 300), and
a process interface model, the process interface model comprising the interface models of the number of processing stations (225, 300),
- generating an adaptive simulation model (150) of the industrial process (200), comprising importing the data representing the state of the processing station (225, 300) provided by the number of processing stations (225, 300) into the adaptive simulation model (150) via the information metamodel (140);
- performing a discrete-event simulation; and
- predicting future states of the material flow based on the discrete-event simulation.

2. The method of claim 1, wherein generating the adaptive simulation model (150) further comprises selecting an appropriate simulation model from a library of simulation models.

3. The method of claims 1 or 2, wherein the method further comprises, based on the adaptive simulation model (150), generating at least one of the following analytics applications:
- a key performance indicator dashboard,
- a current operations monitor,
- a future operations predictor, and
- a what-if analysis tool.

4. The method of claim 3, wherein the method includes a feedback loop from at least one of the analytics applications to provide feedback to the information metamodel (140) for iteratively improving the information metamodel (140) and/or the simulation accuracy based on the information metamodel (140).

5. The method of any of the preceding claims, wherein the generating an information metamodel (140) includes at least one of the following:
- generating a type library (142) from the processing station layout (206, 260) and the interface model of the number of processing station (225, 300),
- generating an instance model (144) comprising the processing station layout (206, 260) of at least one of the number of processing stations (225, 300) as defined by the type library (142),
- generating an instance model (144) comprising an interface model of at least one of the number of processing stations (225, 300) as defined by the type library (142),
- generating a process layout model comprising the material flow-path to and from the at least one of the number of processing stations (225, 300) included in the instance model (144),
- importing data input ports for importing data representing the state of the processing station (225, 300) provided by the number of processing stations (225, 300) into the instance model (144),
- enabling data flow between interfaces of the number of processing stations (225, 300) by using a data value exporter/importer linked via the instance model (144); particularly wherein
the generated information metamodel (140) is configured for allowing the dynamic addition, removal and exchange of instances within the instance model (144).

6. The method of any of the preceding claims, wherein the industrial process (200) is a mine process, the mine process including at least one of the following processing stations (225, 300):
- Planning (221),
- Blasting (222),
- Hauling (223),
- Storage,
- Ore processing (225, 300), and
- Shipping.

7. The method of any one of claims 1 to 5, wherein the industrial process (200) includes one of agricultural harvesting, food/beverage processing, chemical/pharmaceutical manufacturing, pulp and paper production, consumer good manufacturing, metal processing, battery production, semiconductor fabrication, land- and aircraft manufacturing.

8. The method of any of the preceding claims, wherein the interface model of each processing station (225, 300) is configured for providing connectivity between the information metamodel (140) and/or the adaptive simulation model (150) and the processing station (225, 300).

9. The method of any of the preceding claims, wherein the process layout model links a number of processing station layouts (206, 260) according to the material flow-paths between the processing stations (225, 300); and/or wherein
the process interface model of the information metamodel (140) links the data representing a state of the processing station provided by a processing station (225, 300) of the number of processing stations (225, 300) to the process layout model.

10. The method of any of the preceding claims, wherein the information metamodel (140) provides an interface for a communication of a first processing station (225, 300) of the number of processing stations (225, 300) with a second processing station (225, 300) of the number of processing stations (225, 300).

11. The method of any of the preceding claims, further comprising:
- using the adaptive simulation model (150) to identify material blobs (350, 352, 354) in the material flow and to export an event log file referring to the material blobs (350, 352, 354) and representing the material flow; and particularly
- pre-processing the event log file before processing the event log file, wherein pre-processing the event log file excludes unnecessary data and/or reformats the data in the log file.

12. The method of claim 11, further comprising:
- processing the event log file with a process mining technique to generate a process map; particularly wherein
processing the event log file comprises at least one of determining case identifiers required by the process mining technique, filtering, and reducing noise, and the method particularly
further comprising at least one of:
- using the process map to identify a bottleneck in the industrial process (200);
- performing a conformance test;
- performing a statistical analysis; and
- using the statistical analysis to update the information metamodel (140).

13. The method of any of the preceding claims, wherein the information metamodel (140) and the adaptive simulation model (150) are comprised in a digital twin (130) of the industrial process (200).

14. A system (100) for performing the method according to any of the preceding method claims.

## Patentansprüche

1. Computerimplementiertes Verfahren zur Überwachung eines kontinuierlichen industriellen Prozesses (200), wobei der industrielle Prozess Folgendes umfasst:
eine Anzahl von Verarbeitungsstationen (225, 300) zum Verarbeiten von Material,
einen Materialfluss zwischen der Anzahl von Verarbeitungsstationen (225, 300), wobei jede Verarbeitungsstation (225, 300) dynamisch Daten bereitstellt, die einen Zustand der Verarbeitungsstation (225, 300) darstellen;
wobei das Verfahren Folgendes umfasst:
- Bereitstellen, für jede Verarbeitungsstation (225, 300), eines Verarbeitungsstationslayouts (206, 260) der Verarbeitungsstation (225, 300), wobei das Verarbeitungsstationslayout (206, 260) Folgendes umfasst:
eine Darstellung eines physischen Layouts der Verarbeitungsstation (225, 300), und
eine Darstellung von Materialflusspfaden zu und von der Verarbeitungsstation (225, 300),
wobei das Verarbeitungsstationslayout (206, 260) dazu ausgelegt ist, eine Zuordnung des Materialflusses zu und von der Verarbeitungsstation (225, 300) zu ermöglichen;
- Bereitstellen, für jede Verarbeitungsstation (225, 300), eines Schnittstellenmodells der Verarbeitungsstation (225, 300), wobei das Schnittstellenmodell Folgendes umfasst:
eine Darstellung der Dateneingabeports und Datenausgabeports der Verarbeitungsstation (225, 300),
wobei das Schnittstellenmodell dazu ausgelegt ist, eine Zuordnung eines Datenflusses zu den Dateneingabeports und von den Datenausgabeports der Verarbeitungsstation (225, 300) zu ermöglichen;
- Erstellen eines Informationsmetamodells (140) aus dem Verarbeitungsstationslayout (206, 260) und dem Schnittstellenmodell der Anzahl von Verarbeitungsstationen (225, 300), wobei das Informationsmetamodell (140) Folgendes umfasst:
ein Prozesslayoutmodell, wobei das Prozesslayoutmodell die Verarbeitungsstationslayouts (206, 260) der Anzahl von Verarbeitungsstationen (225, 300) umfasst, und
ein Prozessschnittstellenmodell, wobei das Prozessschnittstellenmodell die Schnittstellenmodell der Anzahl von Verarbeitungsstationen (225, 300) umfasst,
- Erstellen eines adaptiven Simulationsmodells (150) des industriellen Prozesses (200), umfassend Importieren der Daten, die den Zustand der Verarbeitungsstation (225, 300) darstellen und von der Anzahl von Verarbeitungsstationen (225, 300) bereitgestellt werden, über das Informationsmetamodell (140) in das adaptive Simulationsmodel (150);
- Durchführen einer ereignisdiskreten Simulation; und
- Vorhersagen zukünftiger Zustände des Materialflusses basierend auf der ereignisdiskreten Simulation.

2. Verfahren nach Anspruch 1, wobei das Erstellen des adaptiven Simulationsmodells (150) ferner Auswählen eines geeigneten Simulationsmodells aus einer Bibliothek von Simulationsmodellen umfasst.

3. Verfahren nach Anspruch 1 oder 2, wobei das Verfahren, basierend auf dem adaptiven Simulationsmodell (150), ferner Erstellen mindestens einer der folgenden Analyseanwendungen umfasst:
- ein Dashboard mit wesentlichen Leistungsindikatoren,
- einen Überwacher des aktuellen Betriebsablauf,
- einen Vorhersager des zukünftigen Betriebsablaufs und
- ein Was-wäre-wenn-Analysetool.

4. Verfahren nach Anspruch 3, wobei das Verfahren eine Feedbackschleife von mindestens einer der Analyseanwendungen umfasst, um Feedback an das Informationsmetamodell (140) bereitzustellen, um das Informationsmetamodell (140) und/oder die Simulationsgenauigkeit basierend auf dem Informationsmetamodell (140) iterativ zu verbessern.

5. Verfahren nach einem der vorhergehenden Ansprüche, wobei das Erstellen eines Informationsmetamodells (140) mindestens eines von Folgendem umfasst:
- Erstellen einer Typbibliothek (142) aus dem Verarbeitungsstationslayout (206, 260) und dem Schnittstellenmodell der Anzahl von Verarbeitungsstationen (225, 300),
- Erstellen eines Instanzmodells (144), das das Verarbeitungsstationslayout (206, 260) mindestens einer der Anzahl von Verarbeitungsstationen (225, 300), wie durch die Typbibliothek (142) definiert, umfasst,
- Erstellen eines Instanzmodells (144), das ein Schnittstellenmodell mindestens einer der Anzahl von Verarbeitungsstationen (225, 300), wie durch die Typbibliothek (142) definiert, umfasst,
- Erstellen eines Prozesslayoutmodells, das den Materialflusspfad zu und von der mindestens einen der Anzahl von Verarbeitungsstationen (225, 300) umfasst, die in dem Instanzmodell (144) enthalten sind,
- Importieren von Dateneingabeports zum Importieren von Daten, die den Zustand der Verarbeitungsstation (225, 300) darstellen und von der Anzahl von Verarbeitungsstationen (225, 300) bereitgestellt werden, in das Instanzmodell (144),
- Ermöglichen von Datenfluss zwischen Schnittstellen der Anzahl von Verarbeitungsstationen (225, 300) durch Verwenden eines Datenwertexporteurs/-importeurs über das Instanzmodell (144); wobei insbesondere
das erstellte Informationsmetamodell (140) dazu ausgelegt ist, das dynamische Hinzufügen, Entfernen und Austauschen von Instanzen innerhalb des Instanzmodells (144) zu ermöglichen.

6. Verfahren nach einem der vorhergehenden Ansprüche, wobei der industrielle Prozess (200) ein Bergbauprozess ist, wobei der Bergbauprozess mindestens eine der folgenden Verarbeitungsstationen (225, 300) umfasst:
- Planung (221),
- Sprengung (222),
- Förderung (223),
- Lagerung,
- Erzaufbereitung (225, 300) und
- Versand.

7. Verfahren nach einem der Ansprüche 1 bis 5, wobei der industrielle Prozess (200) eines von landwirtschaftlicher Ernte, Lebensmittel-/Getränkeverarbeitung, chemischer/pharmazeutischer Herstellung, Zellstoff- und Papierherstellung, Konsumgüterherstellung, Metallverarbeitung, Batterieherstellung, Halbleiterfertigung, Land- und Flugzeugbau umfasst.

8. Verfahren nach einem der vorhergehenden Ansprüche, wobei das Schnittstellenmodell jeder Verarbeitungsstation (225, 300) dazu ausgelegt ist, Konnektivität zwischen dem Informationsmetamodell (140) und/oder dem adaptiven Simulationsmodell (150) und der Verarbeitungsstation (225, 300) bereitzustellen.

9. Verfahren nach einem der vorhergehenden Ansprüche, wobei das Prozesslayoutmodell eine Anzahl von Verarbeitungsstationslayouts (206, 260) gemäß den Materialflusspfaden zwischen den Verarbeitungsstationen (225, 300) verknüpft; und/oder wobei
das Prozessschnittstellenmodell des Informationsmetamodells (140) die Daten, die einen Zustand der Verarbeitungsstation darstellen und von einer Verarbeitungsstation (225, 300) der Anzahl von Verarbeitungsstationen (225, 300) bereitgestellt werden, mit dem Prozesslayoutmodell verknüpft.

10. Verfahren nach einem der vorhergehenden Ansprüche, wobei das Informationsmetamodell (140) eine Schnittstelle für eine Kommunikation einer ersten Verarbeitungsstation (225, 300) der Anzahl von Verarbeitungsstationen (225, 300) mit einer zweiten Verarbeitungsstation (225, 300) der Anzahl von Verarbeitungsstationen (225, 300) bereitstellt.

11. Verfahren nach einem der vorhergehenden Ansprüche, ferner umfassend:
- Verwenden des adaptiven Simulationsmodells (150), um Materialklumpen (350, 352, 354) im Materialfluss zu identifizieren und eine Ereignisprotokolldatei zu exportieren, die sich auf die Materialklumpen (350, 352, 354) bezieht und den Materialfluss darstellt; und insbesondere
- Vorverarbeiten der Ereignisprotokolldatei vor dem Verarbeiten der Ereignisprotokolldatei, wobei das Vorverarbeiten unnötige Daten ausschließt und/oder die Daten in der Protokolldatei neu formatiert.

12. Verfahren nach Anspruch 11, ferner umfassend:
- Verarbeiten der Ereignisprotokolldatei mit einer Prozess-Mining-Technik, um eine Prozesskarte zu erstellen; wobei insbesondere
das Verarbeiten der Ereignisprotokolldatei mindestens eines von Bestimmen von Fallkennungen, die für die Prozess-Mining-Technik erforderlich sind, Filtern und Rauschmindern umfasst und das Verfahren insbesondere ferner mindestens eines von Folgendem umfasst:
- Verwenden der Prozesskarte zum Identifizieren eines Engpasses im industriellen Prozess (200);
- Durchführen eines Konformitätstests;
- Durchführen einer statistischen Analyse und
- Verwenden der statistischen Analyse zum Aktualisieren des Informationsmetamodells (140).

13. Verfahren nach einem der vorhergehenden Ansprüche, wobei das Informationsmetamodell (140) und das adaptive Simulationsmodell (150) in einem digitalen Zwilling (130) des industriellen Prozesses (200) umfasst sind.

14. System (100) zum Durchführen des Verfahrens nach einem der vorhergehenden Verfahrensansprüche.

## Revendications

1. Procédé, mis en œuvre par ordinateur, de surveillance d'un processus industriel continu (200), le processus industriel comprenant :
une multiplicité de postes (225, 300) de traitement servant à traiter un matériau,
un flux de matériau entre la multiplicité de postes (225, 300) de traitement, chaque poste (225, 300) de traitement fournissant dynamiquement des données représentant un état du poste (225, 300) de traitement ;
le procédé comprenant :
- la fourniture, pour chaque poste (225, 300) de traitement, d'une disposition (206, 260) de poste de traitement du poste (225, 300) de traitement, la disposition (206, 260) de poste de traitement comprenant :
une représentation d'une disposition physique du poste (225, 300) de traitement, et
une représentation de trajets de flux de matériau vers et depuis le poste (225, 300) de traitement,
la disposition (206, 260) de poste de traitement étant configurée pour permettre une cartographie du flux de matériau vers et depuis le poste (225, 300) de traitement ;
- la fourniture, pour chaque poste (225, 300) de traitement, d'un modèle d'interface du poste (225, 300) de traitement, le modèle d'interface comprenant :
une représentation de ports d'entrée de données et de ports de sortie de données du poste (225, 300) de traitement,
le modèle d'interface étant configuré pour permettre une cartographie d'un flux de données vers les ports d'entrée de données et à partir des ports de sortie de données du poste (225, 300) de traitement ;
- la génération d'un métamodèle (140) d'information à partir de la disposition (206, 260) de poste de traitement et du modèle d'interface de la multiplicité de postes (225, 300) de traitement, le métamodèle (140) d'information comprenant :
un modèle de disposition de processus, le modèle de disposition de processus comprenant les dispositions (206, 260) de postes de traitement de la multiplicité de postes (225, 300) de traitement, et
un modèle d'interfaces de processus, le modèle d'interfaces de processus comprenant les modèles d'interfaces de la multiplicité de postes (225, 300) de traitement,
- la génération d'un modèle adaptatif (150) de simulation du processus industriel (200), comprenant l'import des données représentant l'état du poste (225, 300) de traitement fournies par la multiplicité de postes (225, 300) de traitement dans le modèle adaptatif (150) de simulation par l'intermédiaire du métamodèle (140) d'information ;
- la réalisation d'une simulation à évènements discrets ; et
- la prédiction d'états futurs du flux de matériau sur la base de la simulation à évènements discrets.

2. Procédé selon la revendication 1, la génération du modèle adaptatif (150) de simulation comprenant en outre la sélection d'un modèle de simulation approprié à partir d'une bibliothèque de modèles de simulation.

3. Procédé selon les revendications 1 ou 2, le procédé comprenant en outre, sur la base du modèle adaptatif (150) de simulation, la génération d'au moins une des applications analytiques suivantes :
- un tableau de bord d'indicateurs-clés de performances,
- un moyen de surveillance d'opérations actuelles,
- un prédicteur d'opérations futures, et
- un outil d'analyse par examen d'hypothèses.

4. Procédé selon la revendication 3, le procédé comprenant une boucle de réaction à partir d'au moins une des applications analytiques pour fournir une rétroaction au métamodèle (140) d'information afin d'améliorer itérativement le métamodèle (140) d'information et/ou l'exactitude de simulation sur la base du métamodèle (140) d'information.

5. Procédé selon l'une quelconque des revendications précédentes, la génération d'un métamodèle (140) d'information comprenant au moins une des actions de :
- générer une bibliothèque (142) de types à partir de la disposition (206, 260) de poste de traitement et du modèle d'interface de la multiplicité de postes (225, 300) de traitement,
- générer un modèle (144) d'instances comprenant la disposition (206, 260) de poste de traitement d'au moins un poste de la multiplicité de postes (225, 300) de traitement telle que définie par la bibliothèque (142) de types,
- générer un modèle (144) d'instances comprenant un modèle d'interface d'au moins un poste de la multiplicité de postes (225, 300) de traitement tel que défini par la bibliothèque (142) de types,
- générer un modèle de disposition de processus comprenant le trajet de flux de matériau vers et depuis le ou les postes de la multiplicité de postes (225, 300) de traitement inclus dans le modèle (144) d'instances,
- importer des ports d'entrée de données pour importer des données représentant l'état du poste (225, 300) de traitement fournies par la multiplicité de postes (225, 300) de traitement dans le modèle (144) d'instances,
- permettre un flux de données entre interfaces de la multiplicité de postes (225, 300) de traitement en utilisant un moyen d'export/import de valeurs de données lié par l'intermédiaire du modèle (144) d'instances ; en particulier
le métamodèle (140) d'information généré étant configuré pour permettre l'ajout, la suppression et l'échange dynamiques d'instances au sein du modèle (144) d'instances.

6. Procédé selon l'une quelconque des revendications précédentes, le processus industriel (200) étant un processus minier, le processus minier incluant au moins un des postes (225, 300) de traitement suivants :
- planification (221),
- sautage (222),
- extraction (223),
- stockage,
- traitement (225, 300) de minerai, et
- expédition.

7. Procédé selon l'une quelconque des revendications 1 à 5, le processus industriel (200) comprenant un processus parmi une récolte agricole, une transformation d'aliments/de boissons, une fabrication chimique/pharmaceutique, une production de pâte et de papier, une fabrication de biens de consommation, un traitement de métaux, une production de batteries, une fabrication de semiconducteurs, une fabrication d'engins terrestres et d'aéronefs.

8. Procédé selon l'une quelconque des revendications précédentes, le modèle d'interface de chaque poste (225, 300) de traitement étant configuré pour assurer une connectivité entre le métamodèle (140) d'information et/ou le modèle adaptatif (150) de simulation et le poste (225, 300) de traitement.

9. Procédé selon l'une quelconque des revendications précédentes, le modèle de disposition de processus liant une multiplicité de dispositions (206, 260) de postes de traitement selon les trajets de flux de matériau entre les postes (225, 300) de traitement ; et/ou le modèle d'interfaces de processus du métamodèle (140) d'information liant les données représentant un état du poste de traitement fournies par un poste (225, 300) de traitement de la multiplicité de postes (225, 300) de traitement au modèle de disposition de processus.

10. Procédé selon l'une quelconque des revendications précédentes, le métamodèle (140) d'information fournissant une interface pour une communication d'un premier poste (225, 300) de traitement de la multiplicité de postes (225, 300) de traitement avec un second poste (225, 300) de traitement de la multiplicité de postes (225, 300) de traitement.

11. Procédé selon l'une quelconque des revendications précédentes, comprenant en outre :
- l'utilisation du modèle adaptatif (150) de simulation pour identifier des amas (350, 352, 354) de matériau dans le flux de matériau et pour exporter un fichier de journal d'événements faisant référence aux amas (350, 352, 354) de matériau et représentant le flux de matériau ; et en particulier
- le prétraitement du fichier de journal d'événements avant de traiter le fichier de journal d'événements, le prétraitement du fichier de journal d'événements excluant des données superflues et/ou reformatant les données dans le fichier de journal.

12. Procédé selon la revendication 11, comprenant en outre :
- le traitement du fichier de journal d'événements avec une technique d'exploration de processus pour générer une carte de processus ; en particulier le traitement du fichier de journal d'événements comprenant au moins une action parmi la détermination d'identifiants de cas requis par la technique d'exploration de processus, le filtrage et la réduction du bruit, et en particulier le procédé
comprenant en outre au moins une action parmi :
- l'utilisation de la carte de processus pour identifier un goulet d'étranglement dans le processus industriel (200) ;
- la réalisation d'un test d'observance ;
- la réalisation d'une analyse statistique ; et
- l'utilisation de l'analyse statistique pour mettre à jour le métamodèle (140) d'information.

13. Procédé selon l'une quelconque des revendications précédentes, le métamodèle (140) d'information et le modèle adaptatif (150) de simulation étant compris dans un jumeau numérique (130) du processus industriel (200).

14. Système (100) destiné à réaliser le procédé selon l'une quelconque des revendications de procédé qui précèdent.
